# EUROPÄISCHE PATENTANMELDUNG

(11) **EP 4 617 119 A1**
(43) Veröffentlichungstag der Anmeldung: **17.09.2025**
(21) Anmeldenummer: 25156006.6
(22) Anmeldetag: 05.02.2025
(51) Int. Cl.: B60Q 1/14

(54) **STEUEREINHEIT, SYSTEM UND VERFAHREN ZUM ERZEUGEN EINES BLENDFREIEN SCHEINWERFERLICHTS SOWIE DAS SYSTEM AUFWEISENDES FAHRZEUG**

(30) Priorität: 11.03.2024 DE 102024202277
(71) Anmelder: Stellantis Auto SAS, 78300 Poissy (FR)
(72) Erfinder: HOLDERRIED, Stefan, 65428 Rüsselsheim am Main (DE); GROENEWALD, Sebastian, 65428 Rüsselsheim am Main (DE)
(74) Vertreter: ESIP

(57) **Zusammenfassung**

Eine Steuereinheit zum Erzeugen eines blendfreien Scheinwerferlichts mittels einer Fahrzeugscheinwerferanlage (21) mit wenigstens einem HD-Modul zum hochaufgelösten Ausleuchten wenigstens eines HD-Lichtfelds wird bereitgestellt. Die Steuereinheit umfasst einen Prozessor (24), eine Speichereinheit (25) zum Speichern von Daten und maschinenlesbaren Anweisungen für den Prozessor (24), und eine Schnittstelle (26). Die Schnittstelle (26) ist dazu ausgebildet, von wenigstens einer Infrarotkamera Sensordaten zum Erfassen einer aktuellen Position wenigstens eines blendungskritischen Bereichs (8), insbesondere wenigstens eines anderen durch die Fahrzeugscheinwerferanlage (21) einer Blendungsgefahr ausgesetzten Fahrzeugs (7), zu empfangen und Steuersignale zum Ansteuern der Fahrzeugscheinwerferanlage (21) auszugeben. Die Speichereinheit (25) enthält Anweisungen für den Prozessor (24), die empfangenen Sensordaten auszuwerten und basierend auf der aktuellen Position des wenigstens einen blendungskritischen Bereichs (8) die Fahrzeugscheinwerferanlage (21) zum gezielten Abdunkeln des wenigstens einen blendungskritischen Bereichs so anzusteuern, dass in dem Scheinwerferlichtfeld wenigstens eine Dunkelzone (10) unter Ausnutzung der HD-Funktionalität der Fahrzeugscheinwerferanlage (21) entsteht.

## Beschreibung

Die vorliegende Offenbarung betrifft im Allgemeinen Verfahren zum Steuern von Scheinwerfern in Fahrzeugen. Im speziellen betrifft die vorliegende Offenbarung eine Steuervorrichtung, ein Verfahren und ein System zum Erzeugen eines blendfreien Scheinwerferlichts sowie ein das System aufweisendes Fahrzeug.

Es sind Fahrzeugscheinwerfer, insbesondere mit einem segmentierten Fernlicht, zum Erzeugen eines blendfreien Fernlichts bekannt. Werden beispielsweise mittels der Fahrzeug-Sensorik in dem Fernlichtbereich des Scheinwerferlichtfelds Verkehrsteilnehmer erfasst, so können bestimmte Segmente des Scheinwerfers zum Erzeugen einer oder mehrerer Dunkelzonen deaktiviert werden, damit die durch die Sensorik erfassten Verkehrsteilnehmer nicht geblendet werden. Um eine zuverlässige Entblendung von Verkehrsteilnehmer sicher zu stellen, erstrecken sich dabei die Dunkelzonen in der Regel auf eine geschätzte Fahrzeugbreite sowie über die gesamte vertikale Höhe des Scheinwerferlichtfelds, was zu einer Beeinträchtigung der Scheinwerferfunktionalität führen kann.

Eine Aufgabe der Ausführungsformen der vorliegenden Offenbarung ist es, eine Steuervorrichtung, ein System und ein Verfahren bereitzustellen, welche es ermöglichen, Verkehrsteilnehmer ohne bzw. unter minimaler Beeinträchtigung der Scheinwerferfunktionalität zuverlässig zu entblenden.

Zur Lösung dieser Aufgabe wird nach einem ersten Aspekt eine Steuereinheit zum Erzeugen eines blendfreien Scheinwerferlichts mittels einer Fahrzeugscheinwerferanlage mit wenigstens einem HD-Modul zum hochaufgelösten Ausleuchten wenigstens eines HD-Lichtfelds bereitgestellt.

Die Fahrzeugscheinwerferanlage kann insbesondere als LED-(Light Emitting Diode) Matrix-Fahrzeugscheinwerferanlage zum Erzeugen eines segmentierten Fernlichts, insbesondere eines in vertikaler und horizontaler Richtung segmentierten Fernlichts, ausgebildet sein. Die HD-(High Definition) Module können insbesondere dazu ausgebildet sein, eine HD-Funktionalität bereitzustellen, um beispielsweise hochaufgelöste Projektionen zur Darstellung von Symbolen und/oder Hinweisinformationen für Verkehrsteilnehmer bereitzustellen. Die HD-Module können insbesondere dazu ausgebildet sein, eine Vielzahl von HD-Lichtspots bzw. Lichtpunkten oder HD-Pixeln zum pixelweisen Ausleuchten eines hochaufgelösten HD-Lichtfelds zu erzeugen.

Die Steuervorrichtung umfasst einen Prozessor, eine Speichereinheit zum Speichern von Daten und maschinenlesbaren Anweisungen für den Prozessor und eine Schnittstelle.

Die Schnittstelle ist dazu ausgebildet, von einer Infrarotkamera, insbesondere FIR- (Far Infrared) und/oder NIR (Near Infrared) Kamera, Sensordaten zum Erfassen einer aktuellen Position wenigstens eines blendungskritischen Bereichs, insbesondere wenigstens eines anderen durch die Fahrzeugscheinwerferanlage einer Blendungsgefahr ausgesetzten Fahrzeugs, zu empfangen. Die Schnittstelle ist ferner dazu ausgebildet, Steuersignale bzw. Steuerbefehle zum Ansteuern der Fahrzeugscheinwerferanlage auszugeben.

Ein blendungskritischer Bereich kann grundsätzlich jeder Bereich in dem Scheinwerferlichtfeld sein, dessen Anleuchten durch das Scheinwerferlicht eine Blendwirkung bzw. Blendung, insbesondere eines Verkehrsteilnehmers verursachen kann. Die Blendwirkung kann eine direkte Blendwirkung sein, bei der die Lichtquelle direkt ins Auge scheint, oder eine indirekte oder reflektierte Blendwirkung, bei der das Licht von einer Oberfläche reflektiert wird, bevor es ins Auge gelangt. Das wenigstens eine andere durch die Fahrzeugscheinwerferanlage einer Blendungsgefahr ausgesetzte Fahrzeug bzw. das andere Fahrzeug kann insbesondere ein oder mehrere vorausfahrende und/oder entgegenkommende Fahrzeuge umfassen. Blendungskritische Bereiche anderer Fahrzeuge können insbesondere alle Bereiche anderer Fahrzeuge sein, von denen eine Blendwirkung auf einen oder mehrere Insassen, insbesondere den Fahrer des anderen Fahrzeugs ausgehen kann. Blendungskritische Bereiche können insbesondere Fahrzeugscheiben oder Spiegel, wie beispielsweise Rückspiegel und/oder Seitenspiegel, der anderen Fahrzeuge umfassen. Blendungskritische Bereiche können auch Straßenabschnitte, insbesondere durch Regen oder Witterung reflektierend gewordene bzw. nasse Straßenabschnitte, sein. Blendungskritische Bereiche können grundsätzlich auch andere bewegliche oder unbewegliche Objekte in Fahrbahnnähe wie z. B. Fußgänger oder Tiere, Fensterscheiben von Gebäuden oder reflektierende Gebäudeteile sein.

Die aktuelle Position des wenigstens einen blendungskritischen Bereichs kann in diesem Kontext sowohl eine Position bzw. ein Ort als auch eine Orientierung des erfassten blendungskritischen Bereichs bedeuten. Die Position und die Orientierung können insbesondere in einem mit dem erfassenden Fahrzeug, d.h. mit dem die Steuervorrichtung und die Sensorik aufweisenden Fahrzeug, bzw. Ego-Fahrzeug festgebundenen Koordinatensystem bzw. Sensorik-Koordinatensystem ermittelt werden. Die Ermittlung kann die Bestimmung der Position des Ego-Fahrzeugs, des anderen Fahrzeugs sowie der Position und Orientierung des oder der blendungskritischen Bereiche und/oder der Abstrahlrichtung des Fernlichts umfassen.

Durch die Ausnutzung der HD-Funktionalität der Fahrzeugscheinwerferanlage kann die wenigstens eine Dunkelzone hochaufgelöst abgegrenzt werden. Insbesondere kann die wenigstens eine Dunkelzone an die Größe bzw. Form des wenigstens einen blendungskritischen Bereichs angepasst werden, so dass die Gesamtfläche der wenigstens einen Dunkelzone reduziert werden kann. Somit kann das effektive Fernlichtfeld bzw. das tatsächlich ausgeleuchtete Fernlichtfeld vergrößert werden, ohne die Sicht von anderen Verkehrsteilnehmern bzw. der Insassen des anderen Fahrzeugs zu beeinträchtigen.

Die Speichereinheit kann Anweisungen für den Prozessor enthalten, die Fahrzeugscheinwerferanlage zum Erzeugen wenigstens einer Dunkelzone in einem Fernlichtfeld und/oder in einem Abblendlichtfeld der Fahrzeugscheinwerferanlage unter Ausnutzung der HD-Funktionalität zu erzeugen, falls die Auswertung der Sensordaten ergibt, dass die wenigstens eine Dunkelzone wenigstens teilweise innerhalb des HD-Lichtfelds und gleichzeitig innerhalb des Fernlichtfelds und/oder innerhalb des Abblendlichts fällt. Insbesondere kann die Fahrzeugscheinwerferanlage so ausgebildet sein, dass das wenigstens ein HD-Lichtfeld wenigstens teilweise mit dem Fernlichtfeld und/oder mit dem Abblendlichtfeld überlappt. Die Steuereinheit kann insbesondere konfiguriert sein, bzw. die Speichereinheit kann Anweisungen für den Prozessor enthalten, die Fahrzeugscheinwerferanlage anzusteuern, zu der blendfreien Fernlicht- bzw. Abblendlicht-Funktionalität die HD-Funktionalität heranzuziehen, um die Gesamtfläche der Dunkelzonen in den Überlappungsbereichen zu minimieren. Aufgrund der hohen Auflösung des HD-Lichts kann die HD-Funktionalität des wenigstens einen HD-Moduls dazu genutzt werden, etwaige in dem Fernlicht und/ oder Abblendlicht erzeugte Dunkelzonen weiter einzuschränken. Insbesondere kann die Fahrzeugscheinwerferanlage so ausgebildet sein, dass das HD-Lichtfeld das Scheinwerferfernlichtfeld wenigstens teilweise abdeckt, so dass die Fernlichtfunktionalität wenigstens teilweise durch die HD-Module bereitgestellt bzw. übernommen werden kann. Durch die Ausnutzung der HD-Funktionalität können somit hochaufgelöste bzw. an die blendungskritischen Bereiche genauer angepasste Dunkelzonen im Fernlichtbereich erzeugt werden.

Die Speichereinheit kann insbesondere Anweisungen für den Prozessor enthalten, die Fahrzeugscheinwerferanlage, insbesondere das wenigstens eine HD-Modul der Fahrzeugscheinwerferanlage, so anzusteuern, dass die wenigstens eine Dunkelzone in wenigstens einer Richtung von einem oder mehreren HD-Lichtspots eingeschränkt ist. Insbesondere kann die Steuereinheit so konfiguriert sein, die wenigstens eine Dunkelzone von einer Richtung bzw. von einer Seite durch einen oder mehreren HD-Lichtspots einzuschränken, von welcher eine genauere Einschränkung durch das blendfreie Fernlicht und/oder Abblendlicht nicht möglich ist.

Die Schnittstelle kann dazu ausgebildet sein, von wenigstens einem weiteren Sensor Daten zum Erfassen einer aktuellen Position des wenigstens einen anderen einer Blendungsgefahr ausgesetzten Fahrzeugs zu empfangen. Insbesondere können die Daten von einem oder mehreren weiteren Sensoren unterstützend herangezogen werden, um die erfassten blendungskritischen Bereiche zu verifizieren bzw. die Zuverlässigkeit der Umgebungserfassung insgesamt zu erhöhen.

Nach einem zweiten Aspekt wird ein System zum Erzeugen eines blendfreien Scheinwerferlichts bereitgestellt. Das System umfasst eine Fahrzeugscheinwerferanlage, insbesondere mit einem linken und mit einem rechten Scheinwerfer, wobei die Fahrzeugscheinwerferanlage wenigstens ein HD-Modul zum hochaufgelösten Ausleuchten wenigstens eines HD-Lichtfels umfasst.

Das System umfasst ferner eine Steuereinheit gemäß dem ersten Aspekt sowie wenigstens eine Infrarotkamera zum Erfassen einer aktuellen Position wenigstens eines blendungskritischen Bereichs, insbesondere eines anderen durch die Fahrzeugscheinwerferanlage einer Blendungsgefahr ausgesetzten Fahrzeugs.

Die Speichereinheit erhält Anweisungen für den Prozessor, die empfangenen Sensordaten auszuwerten und basierend auf der aktuellen Position des wenigstens einen blendungskritischen Bereichs die Fahrzeugscheinwerferanlage zum gezielten Abdunkeln des wenigstens einen blendungskritischen Bereichs so anzusteuern, dass in dem Scheinwerferlichtfeld bzw. in dem wenigstens einen HD-Lichtfeld wenigstens eine Dunkelzone unter Ausnutzung der HD-Funktionalität der Fahrzeugscheinwerferanlage entsteht. Durch die Ausnutzung der HD-Funktionalität zum Bereitstellen des blendfreien Scheinwerferlichts kann das effektive Fernlichtfeld bzw. das tatsächlich ausgeleuchtete Fernlichtfeld vergrößert werden, ohne die Sicht von anderen Verkehrsteilnehmern bzw. der Insassen des anderen Fahrzeugs zu beeinträchtigen.

Die Fahrzeugscheinwerferanlage kann wenigstens ein Fernlichtmodul zum Bereitstellen einer blendfreien Fernlichtfunktionalität und wenigstens ein Abblendlichtmodul zum Bereitstellen einer Abblendlichtfunktionalität umfassen. Das HD-Modul kann zum Ausleuchten wenigstens eines HD-Lichtfelds ausgebildet sein, welches sich in vertikaler Richtung wenigstens teilweise über eine Hell-Dunkel-Grenze des Abblendlichts erstreckt. Insbesondere kann die Fahrzeugscheinwerferanlage so ausgebildet sein, dass das wenigstens ein HD-Lichtfeld wenigstens teilweise mit dem Fernlichtfeld und/oder mit dem Abblendlichtfeld überlappt. Die Steuereinheit kann insbesondere konfiguriert sein, bzw. die Speichereinheit kann Anweisungen für den Prozessor enthalten, die Fahrzeugscheinwerferanlage anzusteuern, zu der blendfreien Fernlicht-Funktionalität die HD-Funktionalität heranzuziehen, so dass die Gesamtfläche der Dunkelzonen in den Überlappungsbereichen reduziert werden kann.

In einigen Ausführungsbeispielen ist das wenigstens eine Abblendlichtmodul zum Bereitstellen einer blendfreien Abblendfunktionalität ausgebildet, wobei die Speichereinheit Anweisungen für den Prozessor enthalten kann, das wenigstens eine HD-Modul zur Unterstützung der Abblendfunktionalität des wenigstens einen Abblendmoduls anzusteuern. Durch das blendfreie Abblendlicht kann insbesondere eine indirekte Blendung, beispielsweise durch die Reflexion an einer nassen Fahrbahn, verhindert werden. Durch die Heranziehung der HD-Funktionalität kann dabei die Größe der Dunkelzonen reduziert werden, so dass die Abblendfunktionalität insgesamt weniger stark beeinträchtigt wird.

Das System kann wenigstens einen weiteren Sensor zum Erfassen einer Position des wenigstens einen anderen einer Blendungsgefahr ausgesetzten Fahrzeugs umfassen. Insbesondere können die Daten von einem oder mehreren weiteren Sensoren unterstützend herangezogen werden, um die erfassten blendungskritischen Bereiche zu verifizieren bzw. die Zuverlässigkeit der Umgebungserfassung insgesamt zu erhöhen. Insbesondere kann die Objekterkennung mittels der Kamera im sichtbaren Spektrum durch Infrarotkamerainformationen unterstützt werden, um den blendfreien Begrenzungsrahmen um ein erkanntes Verkehrsobjekt zu verkleinern.

Nach einem dritten Aspekt wird ein Verfahren zum Erzeugen eines blendfreien Scheinwerferlichts mittels einer Fahrzeugscheinwerferanlage mit wenigstens einem HD-Modul zum hochaufgelösten Ausleuchten wenigstens eines HD-Lichtfelds bereitgestellt.

Das Verfahren umfasst Bereitstellen von Sensordaten von wenigstens einer Infrarotkamera zum Erfassen einer aktuellen Position wenigstens eines blendungskritischen Bereichs, insbesondere eines anderen durch die Fahrzeugscheinwerferanlage einer Blendungsgefahr ausgesetzten Fahrzeugs.

Das Verfahren umfasst ferner Auswerten der Sensordaten zum Ermitteln der aktuellen Position des wenigstens einen blendungskritischen Bereichs und Ansteuern der Fahrzeugscheinwerferanlage zum gezielten Abdunkeln des wenigstens einen blendungskritischen Bereichs, so dass in dem Scheinwerferlichtfeld bzw. in dem wenigstens einen HD-Lichtfeld wenigstens eine Dunkelzone unter Ausnutzung der HD-Funktionalität der Fahrzeugscheinwerferanlage entsteht. Aufgrund der hohen Auflösung des von HD-Pixeln zusammengesetzten HD-Lichts kann die Größe der Dunkelzonen reduziert werden, so dass die Abblendfunktionalität insgesamt nicht bzw. kaum beeinträchtigt wird.

Nach einem vierten Aspekt wird ein Fahrzeug bereitgestellt. Das Fahrzeug umfasst eine Fahrzeugscheinwerferanlage mit wenigstens einem HD-Modul zum hochaufgelösten Ausleuchten eines HD-Lichtfelds, wobei in dem Fahrzeug ein System zum Erzeugen eines blendfreien Scheinwerferlichts gemäß dem zweiten Aspekt implementiert ist. Vorteile und Wirkungen sowie Weiterbildungen des Fahrzeugs ergeben sich aus den Vorteilen und Wirkungen sowie Weiterbildungen des oben beschriebenen Systems. Zur Vermeidung von Wiederholungen wird daher in dieser Hinsicht auf die vorangegangene Beschreibung verwiesen.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch ein Scheinwerferlichtfeld zur Erläuterung des Verfahrens zum Erzeugen eines blendfreien Scheinwerferlichts,
- Fig. 2: zeigt schematisch ein Scheinwerferlichtfeld mit aktivierter blendfreien Fernlichtfunktion zur Erläuterung des Verfahrens,
- Fig. 3: zeigt schematisch ein Scheinwerferlichtfeld mit aktivierter blendfreien Fernlichtfunktion unter Heranziehung der HD-Funktionalität gemäß einem Ausführungsbeispiel,
- Fig. 4: zeigt ein schematisches Blockdiagramm eines Systems zum Erzeugen eines blendfreien Scheinwerferlichts gemäß einem Ausführungsbeispiel, und
- Fig. 5: zeigt ein Flussdiagramm eines Verfahrens zum Erzeugen eines blendfreien Scheinwerferlichts gemäß einem Ausführungsbeispiel.

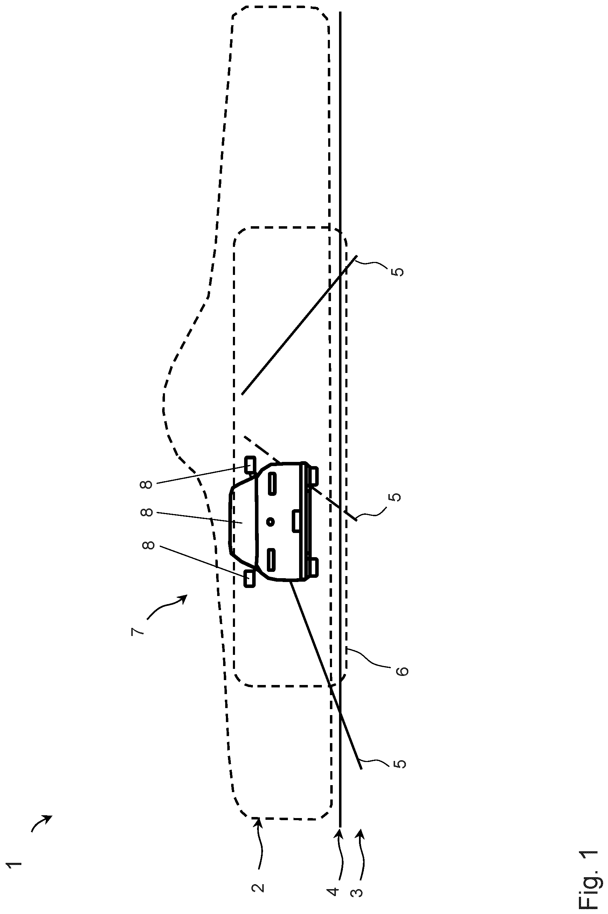

Fig. 1 zeigt schematisch ein Scheinwerferlichtfeld zur Erläuterung des Verfahrens zum Erzeugen eines blendfreien Scheinwerferlichts. Das Scheinwerferlichtfeld 1 umfasst ein Fernlichtfeld 2 bzw. High Beam Area, welches zum Erzeugen eines Scheinwerferfernlichts beispielsweise mit einem oder mehreren Fernlichtmodulen der Fahrzeugscheinwerferanlage ausgeleuchtet werden kann.

Das Scheinwerferlichtfeld 1 umfasst ferner ein Abblendlichtfeld 3 bzw. Low Beam Area, welches zum Erzeugen eines Abblendlichts beispielsweise mit einem oder mehrere Abblendlichtmodulen der Fahrzeugscheinwerferanlage ausgeleuchtet werden kann. Fig. 1 zeigt zudem schematisch eine sogenannte Low Beam Cut-Off Line 4, welche im Wesentlichen der Grenze zwischen dem Fernlichtfeld 2 und dem Abblendlichtfeld 3 entspricht.

Ferner wird in Fig. 1 Straßenmarkierungen 5 in Form von durgezogenen Linien und einer gestrichelten Linie in der Mitte der Fahrbahn sowie ein HD-(High-Resolution) Lichtfeld 6 dargestellt. Das HD-Lichtfeld 6 kann insbesondere mittels eines oder mehrerer HD-Module der Fahrzeugscheinwerferanlage hochaufgelöst ausgeleuchtet werden kann.

In dem gezeigten Ausführungsbeispiel erstreckt sich HD-Lichtfeld 6 dabei in vertikaler Richtung über die Low Beam Cut-Off Line 4 hinweg und deckt Teile des Fernlichtfelds 2 sowie des Abblendlichtfelds 3 ab.

In Fig. 1 wird ferner ein vorausfahrendes Fahrzeug 7 als Beispiel eines einer Blendungsgefahr ausgesetzten Verkehrsteilnehmers schematisch dargestellt. In dem gezeigten Beispiel stellen die Seitenrückspiegel sowie Heckscheibe jeweils einen blendungskritischen Bereich 8 dar, über bzw. durch welche eine Blendung von Insassen des Fahrzeugs 7 entstehen kann.

In dem in Fig. 1 gezeigten Beispiel fallen sämtlichen blendungskritische Bereiche 8 in das Fernlichtfeld 2 und wären im Falle einer Fahrzeugscheinwerferanlage ohne blendfreie Fernlichtfunktionalität auch angeleuchtet.

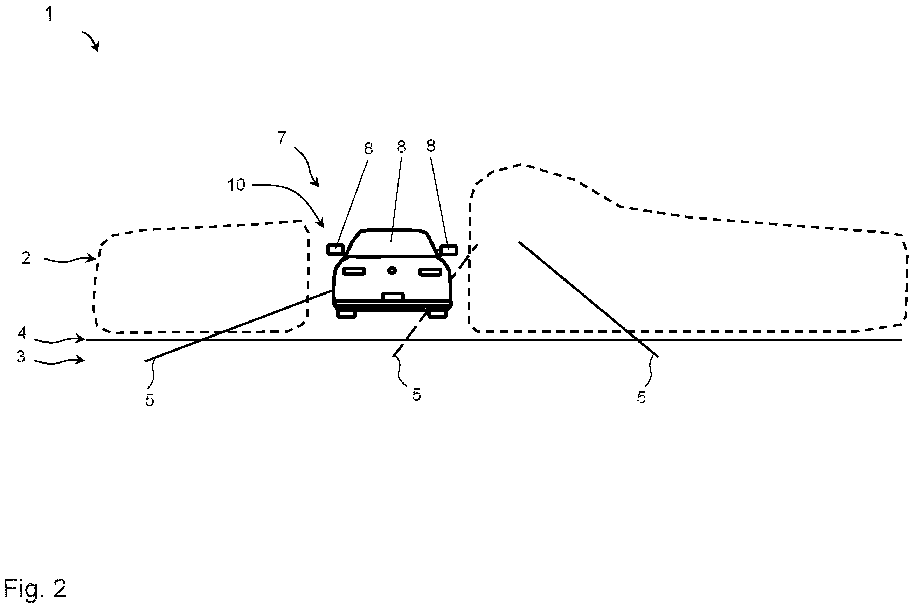

Fig. 2 zeigt schematisch ein Scheinwerferlichtfeld mit aktivierter blendfreien Fernlichtfunktion zur Erläuterung des Verfahrens. In diesem Beispiel erfolgt die Entblendung des vorausfahrenden Fahrzeugs 7 durch Erzeugung einer Dunkelzone 10 in dem Fernlichtfeld 2. Die Dunkelzone 10 kann insbesondere durch Deaktivieren von einem oder mehreren Segmenten in dem segmentierten Scheinwerferfernlicht erzeugt werden. Die HD-Funktionalität der Fahrzeugscheinwerferanlage bleibt dabei deaktiviert und das HD-Lichtfeld wird zur besseren Übersichtlichkeit nicht gezeigt.

Die Darstellung der Fig. 2 soll insbesondere das Problem der herkömmlichen Fahrzeugscheinwerferanlage mit auf ADAS- (Advanced Driver Assistant Systems) Kameras basierter Objekterkennung verdeutlichen. Die herkömmliche Methode ermöglicht insbesondere keine genaue Einschränkung der Dunkelzone bzw. des blendfreien Bereichs in der vertikalen Richtung. In dem gezeigten Beispiel wird das Fernlicht deshalb im Bereich des Fahrzeugs 7 über die gesamte Höhe abgeblendet, wodurch die Scheinwerferperformance erheblich beeinträchtigt wird.

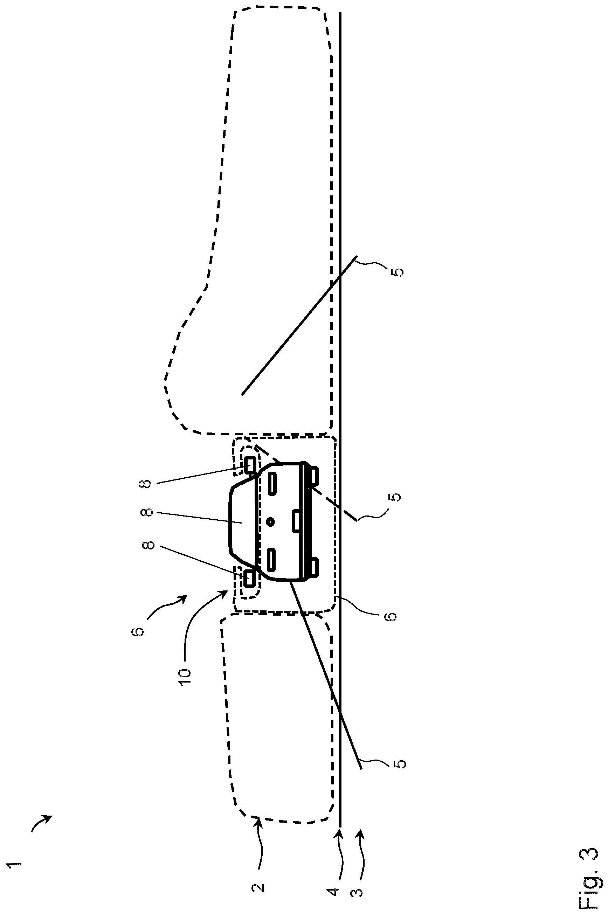

Fig. 3 zeigt schematisch ein Scheinwerferlichtfeld mit aktivierter blendfreien Fernlichtfunktion unter Heranziehung der HD-Funktionalität gemäß einem Ausführungsbeispiel. Insbesondere zeigt Fig. 3 eine Entblendung des vorausfahrenden Fahrzeugs 7 gemäß Fig. 2, wobei zusätzlich zu dem blendfreien Fernlicht auch die HD-Funktionalität der Fahrzeugscheinwerferanlage herangezogen wird. Dabei wird ein oder mehrere HD-Module der Fahrzeugscheinwerferanlage zur Unterstützung der Fernlichtfunktion eingesetzt.

Insbesondere wird die Dunkelzone 10 gemäß Fig. 2 zum Teil durch das HD-Licht ausgeleuchtet, ohne dabei eine Blendung der Insassen des vorausfahrenden Fahrzeugs 7 zu verursachen. Denn die hochaufgelöste HD-Funktionalität ermöglicht es, aus dem HD-Lichtfeld die blendungskritische Bereiche 8 präzise auszusparen.

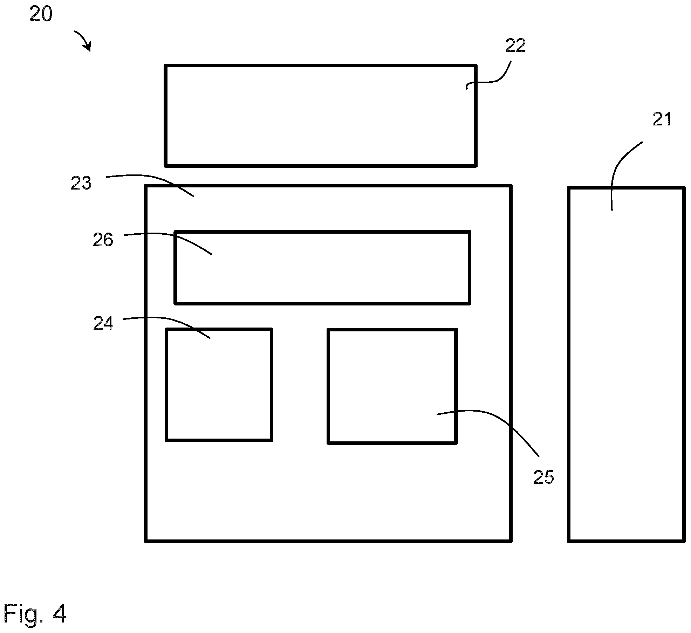

Fig. 4. zeigt ein schematisches Blockdiagramm eines Systems zum Erzeugen eines blendfreien Scheinwerferlichts gemäß einem Ausführungsbeispiel. Das System 20 umfasst eine Fahrzeugscheinwerferanlage 21. Die Fahrzeugscheinwerferanlage 21 besitzt vorzugsweise zwei Scheinwerfer mit einer Matrix-LED- bzw. Pixellicht-Einrichtung, die ausgebildet ist, eine Abblendlicht- sowie eine blendfreie Fernlichtverteilung bereitzustellen.

Die Fahrzeugscheinwerferanlage 21 umfasst wenigstens ein HD-Modul zum hochaufgelösten Ausleuchten wenigstens eines HD-Lichtfelds. Insbesondere kann das wenigstens eine HD-Modul dazu ausgebildet sein, hochaufgelöste Projektionen zur Darstellung von Symbolen und/oder Hinweisinformationen für Verkehrsteilnehmer zu erzeugen. Das wenigstens eine HD-Modul ist ferner ausgebildet, insbesondere neben einer Symbolprojektion, eine hochauflösende Lichtverteilung bereitzustellen, die sich in vertikaler Richtung zumindest teilweise über die Hell-Dunkel-Grenze des Abblendlichts erstreckt.

Die Fahrzeugscheinwerferanlage 21 kann insbesondere ein oder mehrere Fernlichtmodule zum Bereitstellen eines blendfreien Fernlichts sowie eine oder mehrere Abblendlichtmodule zum Bereitstellen eines Abblendlichts umfassen. Das wenigstens eine HD-Modul kann insbesondere ausgebildet sein, wenigstens ein HD-Lichtfeld auszuleuchten, welches sich in vertikaler Richtung wenigstens teilweise über eine Hell-Dunkel-Grenze des Abblendlichts bzw. Low Beam Cut-Off Line 4 erstreckt.

Der Einfachheit halber werden auch die HD-, Fernlicht- und Abblendlichtmodule in dem schematischen Blockdiagramm der Fig. 4 nicht gezeigt.

Das System 20 umfasst ferner eine Sensorik 22 mit wenigstens einer Infrarotkamera zum Erfassen einer Position wenigstens eines blendungskritischen Bereichs 8, insbesondere eines anderen durch die Fahrzeugscheinwerferanlage 21 einer Blendungsgefahr ausgesetzten Fahrzeugs 7.

Das System 20 umfasst auch eine Steuereinheit 23 zum Ansteuern der Fahrzeugscheinwerferanlage 21, wobei die Steuereinheit 23 einen Prozessor 24, eine Speichereinheit 25 und eine Schnittstelle 26 umfasst. Die Schnittstelle 26 ist dazu ausgebildet, von wenigstens einer Infrarotkamera Sensordaten zum Erfassen einer Position wenigstens eines blendungskritischen Bereichs 8, insbesondere wenigstens eines anderen durch die Fahrzeugscheinwerferanlage 21 einer Blendungsgefahr ausgesetzten Fahrzeugs 7, zu empfangen und Steuersignale zum Ansteuern der Fahrzeugscheinwerferanlage 21 auszugeben.

Die Steuereinheit 23 kann insbesondere durch Speichern von Daten bzw. maschinenlesbaren Anweisungen in der Speichereinheit 25 konfigurierbar sein. Die Speichereinheit 25 enthält Anweisungen für den Prozessor, die empfangenen Sensordaten auszuwerten und basierend auf der aktuellen Position des wenigstens einen blendungskritischen Bereichs 8 die Fahrzeugscheinwerferanlage 21 zum gezielten Abdunkeln des wenigstens einen blendungskritischen Bereichs 8 so anzusteuern, dass in dem Scheinwerferlichtfeld 1 wenigstens eine Dunkelzone unter Ausnutzung der HD-Funktionalität der Fahrzeugscheinwerferanlage entsteht.

In einigen Ausführungsbeispielen umfasst die Sensorik 22 einen oder mehrere weitere Sensoren zum Erfassen der Fahrzeugumgebung. Beispielsweise kann die Sensorik 22 eine oder mehrere im sichtbaren Lichtspektrum arbeitende Kameras, Radar- oder LIDAR-Sensoren umfassen, um insbesondere die Position anderer Fahrzeuge bzw. der blendungskritischen Bereiche zuverlässig zu bestimmen. Durch die Integration mehrerer Sensoren bzw. mehrerer Quellen von Sensordaten kann die Steuereinheit die Position des anderen Fahrzeugs bzw. der blendungskritischen Bereiche genauer erfassen. Dies minimiert potenzielle Fehler bzw. Fehlsteuerungen der Fahrzeugscheinwerferanlage. Die Verwendung verschiedener Sensoren bzw. Sensorquellen zur Erfassung der Position des anderen Fahrzeugs bzw. der blendungskritischen Bereiche ermöglicht der Steuereinheit, die Fahrzeugumgebung besser zu erfassen, um die Fahrzeugscheinwerferanlage besser an unterschiedliche Umgebungsbedingungen anzupassen.

In einigen Ausführungsbeispielen verfügt die Fahrzeugscheinwerferanlage 21 über eine blendfreie Abblendlichtfunktionalität, um ggf. indirekte Blendung, beispielsweise durch Reflexionen an einer nassen Fahrbahn, zu verhindern. Die Steuereinheit 23 kann konfiguriert sein, bzw. die Speichereinheit 25 kann Anweisungen für den Prozessor 24 enthalten, das eine oder mehrere HD-Module zum Unterstützen der Abblendfunktionalität anzusteuern, so dass die Gesamtfläche der Dunkelzonen in dem Abblendlichtfeld reduziert werden kann.

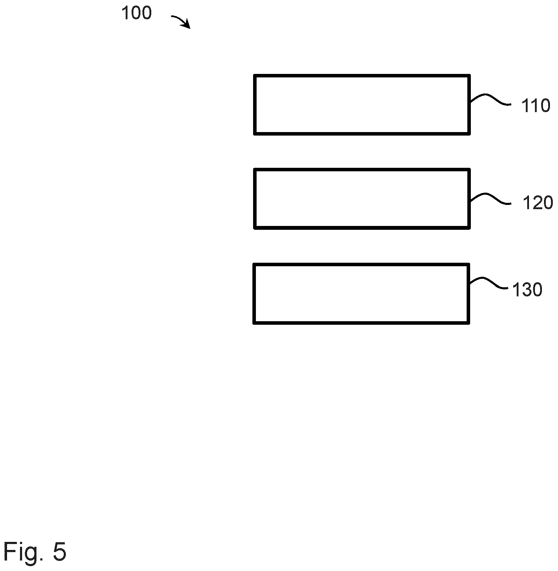

Fig. 5 zeigt ein Flussdiagramm eines Verfahrens zum Erzeugen eines blendfreien Scheinwerferlichts gemäß einem Ausführungsbeispiel. Das Verfahren 100 kann insbesondere mittels eines Systems zum Erzeugen eines blendfreien Scheinwerferlichts gemäß Fig. 4 durchgeführt werden. Gemäß dem Verfahren 100 werden in einem Verfahrensschritt 110 Sensordaten von wenigstens einer Infrarotkamera zum Erfassen einer aktuellen Position wenigstens eines blendungskritischen Bereichs 8, insbesondere eines anderen durch die Fahrzeugscheinwerferanlage 21 einer Blendungsgefahr ausgesetzten Fahrzeugs 7 bereitgestellt.

In einem Verfahrensschritt 120 werden die Sensordaten zum Ermitteln der aktuellen Position des wenigstens einen blendungskritischen Bereichs ausgewertet. Die Auswertung kann insbesondere mittels der Steuereinheit 23 erfolgen. Die Auswertung der Sensordaten kann insbesondere Erkennung vertikaler und horizontaler Begrenzungen der Windschutzscheibe, Heckscheibe und/oder Seitenrückspiegel umfassen. Die Auswertung kann ferner Ermittlung von Entfernungs- und Winkelinformationen bzw. Winkel-Koordinaten aus verarbeiteten Infrarotbildern und Bereitstellung erkannter Objektkoordinaten für blendfreien Fernlichtalgorithmus umfassen. Im Ergebnis kann eine reduzierte blendfreie Fläche erzeugt werden.

In einem weiteren Verfahrensschritt 130 wird die Fahrzeugscheinwerferanlage 21 zum gezielten Abdunkeln des wenigstens einen blendungskritischen Bereichs angesteuert, so dass in dem Scheinwerferlichtfeld wenigstens eine Dunkelzone unter Ausnutzung der HD-Funktionalität der Fahrzeugscheinwerferanlage entsteht. Der Verfahrensschritt 130 kann insbesondere Ansteuern wenigstens eines Fernlichtmoduls der Fahrzeugscheinwerferanlage 21 zum Erzeugen einer Dunkelzone in der Fernlichtverteilung sowie Ansteuern wenigstens eines HD-Moduls zum Verkleinern der Dunkelzone umfassen. Insbesondere kann die HD-Funktionalität der Fahrzeugscheinwerferanlage unterstützend für die Fernlichtfunktionalität eingesetzt werden, in dem ein oder mehrere HD-Module die wenigstens teilweise die Fernlichtfunktionalität übernimmt. Auf diese Weise kann die hohe Auflösung des HD-Lichts zur Verbesserung der Scheinwerferperformance in dem blendfreien Fernlichtmodus ausgenutzt werden.

Mittels der hochaufgelösten HD-Funktionalität können insbesondere auf blendungskritische Bereiche maßgeschneiderte Dunkelzonen erzeugt werden, welche wenigstens teilweise von HD-Pixels eingegrenzt werden. Beispielsweise können Dunkelzonen in einer vertikalen Richtung, insbesondere von unten und/oder von oben durch HD-Pixeln eingegrenzt werden, um ggf. die niedrige Auflösung des grobsegmentierten Fernlichts zu kompensieren.

Mit dem wenigstens einen HD-Lichtmodul kann insbesondere ein Lichtverteilungsmuster in vertikaler und horizontaler Richtung derart moduliert werden, dass eine blendfreie HD-Lichtfunktion bereitgestellt werden kann. Das System ermöglicht somit, die Einschränkungen der herkömmlichen Systeme, beispielsweise mit einer im sichtbaren Lichtspektrum arbeitenden Kamera zum Erkennen von Scheinwerfern bzw. Heckleuchten von anderen Fahrzeugen, zu überwinden, in dem die blendungskritische Bereiche mittels einer FIR-Kamera genau bestimmt werden. Insbesondere können mittels eines Infrarotsensors bzw. Infrarotkamera die vertikalen bzw. horizontalen Begrenzungen der Windschutz-, der Heckscheibe bzw. Rückspiegel detektiert werden, sobald ein Fahrzeug im Beleuchtungsbereich erfasst wird. Die blendungskritischen Bereiche können dann mittels des hochaufgelösten HD-Lichts gezielt und präzise entblendet werden.

In einigen Ausführungsbeispielen umfasst das Verfahren Trainieren der Steuereinheit zum Verbessern der Steuerung der Fahrzeugscheinwerferanlage, so dass eine zuverlässige Entblendung von Verkehrsteilnehmern unter minimaler Beeinträchtigung der Scheinwerferfunktionalität erzielt werden kann. Die Speichereinheit kann insbesondere einen Algorithmus für maschinelles Lernen enthalten, so dass die Steuereinheit anhand von verschiedenen durch die Sensorik erfassten Fahrsituationen bzw. Szenarien, die Entblendung unter Ausnutzung der HD-Funktionalität des Scheinwerfers kontinuierlich verbessern kann.

Der Algorithmus kann insbesondere ein Modul zum Kategorisieren von Verkehrsteilnehmen umfassen und die Speichereinheit kann auf konkrete Kategorien angepasste Steuerungsroutinen enthalten, so dass nach dem Identifizieren einer Fahrzeugkategorie eine passende Steuerungsroutine abgespielt werden kann. Somit können blendungskritische Bereiche fahrzeugspezifisch entblendet werden. Beispielsweise kann ein Doppeldeckerbus anders gelegene blendungskritische Bereiche als Sportwagen aufweisen. Wird beispielsweise durch die Fahrzeug-Sensorik ein Bus bzw. ein Sportwagen erfasst, so wird eine auf Busse bzw. Sportwagen optimierte Steuerroutine abgespielt, wodurch die Rechenleistung verringert und Entblendungsgenauigkeit erhöht werden kann.

Basiert auf einer Vielzahl von Fahrsituationen bzw. Szenarien kann insbesondere die Auswerteeinheit bzw. das FIR-basierte Objekterkennungssystem auf eine Erkennung von Windschutz- bzw. Heckscheiben und Rückspiegel entgegenkommender bzw. vorausfahrender Fahrzeuge trainiert werden, um möglichst kleine blendfreie Bereiche zu einem detektierten Verkehrsobjekt zu ermitteln.

Mit dem hier beschriebenen Verfahren bzw. System kann somit eine hohe Scheinwerferperformance mit einer zuverlässigen Blendungsreduzierung für Verkehrsteilnehmer vereinbart werden. Zudem kann das Potential bzw. die hohe Auflösung von HD-Modulen besser ausgenutzt werden und die mit der Umgebungserfassung im sichtbaren Spektrum verbundenen Engpässe vermieden werden.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Scheinwerferlichtfeld
- 2: Fernlichtfeld
- 3: Abblendlichtfeld
- 4: Low Beam Cut-Off Line
- 5: Straßenmarkierung
- 6: HD-Lichtfeld
- 7: Fahrzeug
- 8: blendungskritischer Bereich

- 10: Dunkelzone

- 20: System
- 21: Fahrzeugscheinwerferanlage
- 22: Sensorik
- 23: Steuereinheit
- 24: Prozessor
- 25: Speichereinheit
- 26: Schnittstelle

- 100: Verfahren
- 110: Verfahrensschritt
- 120: Verfahrensschritt
- 130: Verfahrensschritt

## Patentansprüche

1. Steuereinheit zum Erzeugen eines blendfreien Scheinwerferlichts mittels einer Fahrzeugscheinwerferanlage (21) mit wenigstens einem HD-Modul zum hochaufgelösten Ausleuchten wenigstens eines HD-Lichtfelds, umfassend:
- einen Prozessor (24),
- eine Speichereinheit (25) zum Speichern von Daten und maschinenlesbaren Anweisungen für den Prozessor (24), und
- eine Schnittstelle (26), wobei die Schnittstelle (26) dazu ausgebildet ist, von wenigstens einer Infrarotkamera Sensordaten zum Erfassen einer aktuellen Position wenigstens eines blendungskritischen Bereichs (8), insbesondere wenigstens eines anderen durch die Fahrzeugscheinwerferanlage (21) einer Blendungsgefahr ausgesetzten Fahrzeugs (7), zu empfangen und Steuersignale zum Ansteuern der Fahrzeugscheinwerferanlage (21) auszugeben, wobei die Speichereinheit (25) Anweisungen für den Prozessor (24) enthält, die empfangenen Sensordaten auszuwerten und basierend auf der aktuellen Position des wenigstens einen blendungskritischen Bereichs (8) die Fahrzeugscheinwerferanlage (21) zum gezielten Abdunkeln des wenigstens einen blendungskritischen Bereichs so anzusteuern, dass in dem Scheinwerferlichtfeld wenigstens eine Dunkelzone (10) unter Ausnutzung der HD-Funktionalität der Fahrzeugscheinwerferanlage (21) entsteht.

2. Steuereinheit nach Anspruch 1, wobei die Speichereinheit (25) Anweisungen für den Prozessor (24) enthält, die Fahrzeugscheinwerferanlage (21) zum Erzeugen wenigstens einer Dunkelzone (10) in einem Fernlichtfeld (2) und/oder in einem Abblendlichtfeld (3) der Fahrzeugscheinwerferanlage (21) unter Ausnutzung der HD-Funktionalität zu erzeugen, falls die Auswertung der Sensordaten ergibt, dass die wenigstens eine Dunkelzone (10) wenigstens teilweise innerhalb des HD-Lichtfelds (6) und gleichzeitig innerhalb des Fernlichtfelds (2) und/oder innerhalb des Abblendlichts (3) fällt.

3. Steuereinheit nach Anspruch 2, wobei die Speichereinheit (25) Anweisungen für den Prozessor (24) enthält, die Fahrzeugscheinwerferanlage (21) so anzusteuern, dass die wenigstens eine Dunkelzone (10) in wenigstens einer Richtung von einem oder mehreren HD-Lichtspots eingeschränkt ist.

4. Steuereinheit nach einem der vorhergehenden Ansprüche, wobei die Schnittstelle (26) dazu ausgebildet ist, von wenigstens einem weiteren Sensor Daten zum Erfassen einer aktuellen Position des wenigstens einen anderen einer Blendungsgefahr ausgesetzten Fahrzeugs (7) zu empfangen.

5. System zum Erzeugen eines blendfreien Scheinwerferlichts, umfassend:
- eine Fahrzeugscheinwerferanlage (21) mit wenigstens einem HD-Modul zum hochaufgelösten Ausleuchten wenigstens eines HD-Lichtfelds,
- eine Steuereinheit (23) nach einem der Ansprüche 1 bis 4, sowie
- wenigstens eine Infrarotkamera zum Erfassen einer aktuellen Position wenigstens eines blendungskritischen Bereichs (8), insbesondere eines anderen durch die Fahrzeugscheinwerferanlage einer Blendungsgefahr ausgesetzten Fahrzeugs (7),
wobei die Speichereinheit (25) Anweisungen für den Prozessor (24) enthält, die empfangenen Sensordaten auszuwerten und basierend auf der aktuellen Position des wenigstens einen blendungskritischen Bereichs (8) die Fahrzeugscheinwerferanlage (21) zum gezielten Abdunkeln des wenigstens einen blendungskritischen Bereichs (8) so anzusteuern, dass in dem Scheinwerferlichtfeld (1) wenigstens eine Dunkelzone (10) unter Ausnutzung der HD-Funktionalität der Fahrzeugscheinwerferanlage (21) entsteht.

6. System nach Anspruch 5, wobei die Fahrzeugscheinwerferanlage (21) wenigstens ein Fernlichtmodul zum Bereitstellen einer blendfreien Fernlichtfunktionalität und wenigstens ein Abblendlichtmodul zum Bereitstellen einer Abblendlichtfunktionalität umfasst, und wobei das wenigstens eine HD-Modul zum Ausleuchten wenigstens eines HD-Lichtfelds (6) ausgebildet ist, welches sich in vertikaler Richtung wenigstens teilweise über eine Hell-Dunkel-Grenze (des Abblendlichts erstreckt.

7. System nach Anspruch 6, wobei das wenigstens eine Abblendlichtmodul zum Bereitstellen einer blendfreien Abblendfunktionalität ausgebildet ist, wobei die Speichereinheit Anweisungen für den Prozessor enthält, das wenigstens eine HD-Modul zur Unterstützung der Abblendfunktionalität des wenigstens einen Abblendlichtmoduls anzusteuern.

8. System nach den Ansprüchen 5 bis 7, wobei das System wenigstens einen weiteren Sensor zum Erfassen einer Position des wenigstens einen anderen einer Blendungsgefahr ausgesetzten Fahrzeugs umfasst.

9. Verfahren zum Erzeugen eines blendfreien Scheinwerferlichts mittels einer Fahrzeugscheinwerferanlage mit wenigstens einem HD-Modul zum hochaufgelösten Ausleuchten wenigstens eines HD-Lichtfelds, umfassend:
- Bereitstellen (110) von Sensordaten von wenigstens einer Infrarotkamera zum Erfassen einer aktuellen Position wenigstens eines blendungskritischen Bereichs, insbesondere eines anderen durch die Fahrzeugscheinwerferanlage einer Blendungsgefahr ausgesetzten Fahrzeugs,
- Auswerten (120) der Sensordaten zum Ermitteln der aktuellen Position des wenigstens einen blendungskritischen Bereichs, und
- Ansteuern (130) der Fahrzeugscheinwerferanlage (21) zum gezielten Abdunkeln des wenigstens einen blendungskritischen Bereichs, so dass in dem Scheinwerferlichtfeld wenigstens eine Dunkelzone unter Ausnutzung der HD-Funktionalität der Fahrzeugscheinwerferanlage entsteht.

10. Fahrzeug, umfassend eine Fahrzeugscheinwerferanlage mit einer HD-Funktionalität zum hochaufgelösten Ausleuchten eines HD-Lichtfelds, wobei in dem Fahrzeug ein System zum Ansteuern der Fahrzeugscheinwerferanlage gemäß einem der Ansprüche 5 bis 8 zum Erzeugen eines blendfreien Scheinwerferlichts implementiert ist.
